# EUROPEAN PATENT SPECIFICATION

(11) **EP 3 733 758 B1**
(45) Date of publication and mention of the grant of the patent: **22.10.2025**
(21) Application number: 18895447.3
(22) Date of filing: 19.12.2018
(51) Int. Cl.: C08L 9/00, B60C 1/00, C08K 3/36, C08L 7/00

(54) **TREAD RUBBER COMPOSITION FOR STUDLESS TIRES**
KAUTSCHUKZUSAMMENSETZUNG FÜR SPIKELOSE REIFEN
COMPOSITION DE CAOUTCHOUC DE BANDE DE ROULEMENT POUR PNEUS SANS CLOUS

(30) Priority: 26.12.2017 JP 2017249417
(43) Date of publication of application: 04.11.2020
(73) Proprietor: SUMITOMO RUBBER INDUSTRIES, LTD., Chuo-ku, Kobe-shi, Hyogo 651-0072 (JP)
(72) Inventor: YOSHIOKA, Mikako, Kobe-shi, Hyogo 651-0072 (JP); SAWAKI, Haruko, Kobe-shi, Hyogo 651-0072 (JP); YOKOYAMA, Yuka, Kobe-shi, Hyogo 651-0072 (JP)
(74) Representative: TBK
(86) International application number: PCT/JP2018/046837
(87) International publication number: WO 2019/131390

(56) References cited:
- WO-A1-2016/084984
- WO-A1-2016/098908
- WO-A1-2017/104781
- WO-A1-2017/104781
- JP-A- 2002 241 528
- JP-A- 2005 023 296
- JP-A- 2011 528 735
- JP-A- 2013 514 399
- JP-A- 2013 517 356
- JP-A- 2013 545 835
- JP-A- 2014 218 631
- JP-A- 2014 505 757
- JP-A- 2017 537 198

## Description

### TECHNICAL FIELD

The present invention relates to a tread rubber composition for studless winter tires and a studless winter tire including the tread rubber composition.

### BACKGROUND ART

Studded tires or tire chains have been used for driving on snowy and icy roads. However, since they can cause environmental problems such as dust pollution, studless winter tires have been proposed to replace them. The materials and structure of such studless winter tires are designed to allow the tires to be used on snowy and icy roads with rougher surfaces than normal roads. For example, there have been developed rubber compositions which contain diene rubbers having excellent low-temperature properties, or which contain a large amount of softeners to enhance the softening effect (see, for example, Patent Literature 1).

The performance on ice of studless winter tires may be improved, for example, by increasing the polybutadiene rubber content. However, when too large an amount of polybutadiene rubber is used, the mobility in the rubber increases so that blooming of chemicals can occur. Thus, there is a limit to the increase in polybutadiene rubber content. Another problem is that since the natural rubber content decreases with the increase in polybutadiene rubber content, the rubber has insufficient strength and deteriorated abrasion resistance.

Other proposed techniques include addition of fillers such as zinc oxide whiskers (see Patent Literature 2) or short fibers (see Patent Literature 3). However, these techniques can lead to a decrease in abrasion resistance, and cannot sufficiently improve performance on ice, and thus still have room for improvement. As described above, further improvement is desired in order to simultaneously achieve performance on ice and abrasion resistance in a wide temperature range while suppressing blooming of chemicals.

WO 2017/104781 A1 relates to a tire having a tread, said tread comprising at least two radially superposed portions (8, 9) comprising: a surfacic portion (8) intended to come into contact with ground during rolling at least when the tread is new and in the cured state, the surfacic portion (8) being made of a rubber composition A; an internal portion (9) radically inner located to the surfacic portion (8), the internal portion (9) being made of a rubber composition B; wherein each of the rubber compositions A and B comprises at least a diene elastomer, between 50 and 150 phr of a reinforcing filler, between 20 and 160 phr of a plasticizer, and microparticles; wherein a content of the microparticles in the rubber composition A is between 2 and 40 phr, said content CA being higher than a content of the microparticles in the rubber composition B.

WO 2016/084984 A1 relates to a rubber composition, which can be used in particular as treads for winter tires, comprising a diene elastomer, between 50 and 150 phr of a reinforcing filler, between 20 and 160 phr of a plasticizer comprising more than 10 phr and less than 80 phr of a vegetable oil, between 2 and 40 phr of microparticles of a water soluble sulfate of an alkali metal or an alkaline earth metal.

WO 2016/098908 A1 relates to a snow tire including a tread formed of a rubber composition, the rubber composition comprising at least, more than 50 and up to 100 phr of a first diene elastomer chosen from the group consisting of natural rubber, synthetic polyisoprenes, polybutadienes and the mixtures thereof, optionally, 0 to less than 50 phr of another diene elastomer, 40 to 200 phr of a reinforcing filler comprising an inorganic filler, a carbon black or the mixture thereof, wherein a content of the carbon black is less than 20 phr, more than 10 phr and less than 100 phr of a liquid phosphate plasticizer having a glass transition temperature less than -80°C.

### CITATION LIST

### PATENT LITERATURE

Patent Literature 1: JP 2009-091482 A
Patent Literature 2: JP 2005-53977 A
Patent Literature 3: JP 2002-249619 A

### SUMMARY OF INVENTION

### TECHNICAL PROBLEM

In this context, the present invention aims to provide a rubber composition for studless winter tires that provides a balanced improvement of performance on ice and abrasion resistance, regardless of temperature, and a studless winter tire including the rubber composition.

### SOLUTION TO PROBLEM

The present invention relates to a tread rubber composition for studless winter tires, containing: a rubber component including an isoprene-based rubber and a polybutadiene rubber; a water-soluble fine particle having a median particle size D50 of 1 µm to 1 mm measured by laser diffraction; and a liquid plasticizer, the liquid plasticizer having a glass transition temperature of -50°C or lower and being present in an amount of more than 30 parts by mass per 100 parts by mass of the rubber component.

Preferably, the isoprene-based rubber is present in an amount of 20% by mass or more, and the polybutadiene rubber is present in an amount of 20% by mass or more, each based on 100% by mass of the rubber component in the rubber composition, and the rubber composition contains silica in an amount of 50% by mass or more based on a total of 100% by mass of silica and carbon black.

The liquid plasticizer is at least one selected from the group consisting of plant oils and liquid diene polymers.

Preferably, the at least one liquid diene polymer is at least one selected from the group consisting of liquid polybutadiene polymers, liquid polyisoprene polymers, liquid styrene butadiene copolymers, liquid farnesene polymers, and liquid farnesene butadiene copolymers, all of which are liquid at 20°C.

The water-soluble fine particle is present in an amount of 25 parts by mass or more per 100 parts by mass of the rubber component.

Preferably, the polybutadiene rubber has a cis content of 90% by mass or higher.

Another aspect of the present invention is a studless winter tire, including a tread formed from the rubber composition.

Preferably, the tread of the studless winter tire has a road contact surface with pores having an average diameter of 0.1 to 100 µm after the following running conditions:

### (Running conditions)

The tire is mounted on each wheel of a vehicle (a front-engine, rear-wheel-drive vehicle of 2000 cc displacement made in Japan) and run 100 km on a dry road at ordinary temperature and then 4 km on a snowy or icy road at -10 to -1°C.

Preferably, the studless winter tire has a rate of reduction in pattern noise from before to after the following running conditions, which is enhanced by 2 to 10% as compared with a studless winter tire including a tread formed from a rubber composition having the same formulation except for containing no water-soluble fine particle:

### (Running conditions)

The tire is mounted on each wheel of a vehicle (a front-engine, rear-wheel-drive vehicle of 2000 cc displacement made in Japan) and run 100 km on a dry road at ordinary temperature and then 4 km on a snowy or icy road at -10 to -1°C.

### ADVANTAGEOUS EFFECTS OF INVENTION

The tread rubber composition for studless winter tires of the present invention contains a rubber component including an isoprene-based rubber and a polybutadiene rubber, a water-soluble fine particle having a median particle size D50 of 1 µm to 1 mm measured by laser diffraction, and a liquid plasticizer. Further, the liquid plasticizer has a glass transition temperature of -50°C or lower and is present in an amount of more than 30 parts by mass per 100 parts by mass of the rubber component, wherein the liquid plasticizer is at least one selected from the group consisting of plant oils and liquid diene polymers, and wherein the water-soluble fine particle is present in an amount of 25 parts by mass or more per 100 parts by mass of the rubber component. Such a tread rubber composition provides a balanced improvement of performance on ice and abrasion resistance, regardless of temperature.

### DESCRIPTION OF EMBODIMENTS

The tread rubber composition for studless winter tires of the present invention contains: a rubber component including an isoprene-based rubber and a polybutadiene rubber (BR); a water-soluble fine particle; and a liquid plasticizer. Further, the amount of the liquid plasticizer having a predetermined glass transition temperature or lower is in a predetermined range. The rubber composition provides a balanced improvement of performance on ice and abrasion resistance at both low temperatures (air temperatures of -10 to -6°C) and high temperatures (air temperatures of -5 to 0°C) .

Although unclear, the reason for this effect may be described as follows.

Studless winter tires require grip performance on ice that is independent of air temperature. In order to obtain this performance, it is necessary to use a highly flexible rubber such as foamed rubber. However, if flexibility is simply increased by forming pores in rubber, block rigidity cannot be maintained, resulting in reduced handling stability, and further abrasion resistance can be reduced. Additionally, it is difficult to ensure grip performance on ice at low temperatures where a water film is less likely to be present, because contact area is reduced. Therefore, in order to simultaneously achieve these properties, it is necessary to increase flexibility inside the rubber at low temperatures and further to form pores in the tread surface. However, simply attaching a tread with pores to a material with enhanced low-temperature properties may result in their separation at the interface. It is considered that such separation may be effectively avoided by using the same formulation in both the inside and surface of the tread.

Thus, a formulation containing a water-soluble fine particle and an increased amount of a liquid plasticizer with a predetermined glass transition temperature or lower is used in both the inside and surface of the tread to maintain flexibility even at low temperatures (air temperatures of -10 to -6°C), thereby improving performance on ice. In the presence of a water film at high temperatures (air temperatures of -5 to 0°C), the water-soluble fine particle dissolves to form pores which produce a water draining effect. Therefore, it is then possible to improve robust performance independent of variations in air temperature. For this reason it is considered that grip performance on ice and abrasion resistance can be improved at both high and low temperatures, and the balance between low-temperature performance on ice (performance on ice at air temperatures of -10 to -6°C), high-temperature performance on ice (performance on ice at air temperatures of -5 to 0°C), and abrasion resistance can be synergistically improved.

### (Rubber component)

The rubber composition contains a rubber component including an isoprene-based rubber and a polybutadiene rubber (BR) .

Examples of the isoprene-based rubber include natural rubber (NR), polyisoprene rubber (IR), refined NR, modified NR, and modified IR. The NR and IR may be those usually used in the tire industry, such as SIR20, RSS#3, and TSR20 for the NR, and IR2200 for the IR. Examples of the refined NR include deproteinized natural rubber (DPNR) and highly purified natural rubber (UPNR). Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These isoprene-based rubbers may be used alone, or two or more of these may be used in combination.

In view of abrasion resistance and the balance between low-temperature performance on ice, high-temperature performance on ice, and abrasion resistance, the amount of the isoprene-based rubber based on 100% by mass of the rubber component is preferably 20% by mass or more, more preferably 30% by mass or more. The upper limit of the amount is not particularly critical but is preferably 80% by mass or less, more preferably 60% by mass or less, still more preferably 50% by mass or less.

The BR is not particularly limited, and examples include those usually used in the tire industry, such as high-cis BR, BR containing 1,2-syndiotactic polybutadiene crystals (SPB-containing BR), polybutadiene rubber synthesized using rare earth catalysts (rare earth-catalyzed BR), and tin-modified polybutadiene rubber (tin-modified BR) obtained by modification with tin compounds. Commercial products of such BR include products from Ube Industries, Ltd., JSR Corporation, Asahi Kasei Corporation, and Zeon Corporation. These types of BR may be used alone, or two or more of these may be used in combination.

The BR preferably has a cis content of 80% by mass or higher, more preferably 85% by mass or higher, still more preferably 90% by mass or higher, particularly preferably 95% by mass or higher. With such a BR, good low-temperature performance on ice and good high-temperature performance on ice can be obtained.

Herein, the cis content is determined by infrared absorption spectrometry.

In view of low/high-temperature performance on ice and the balance between low-temperature performance on ice, high-temperature performance on ice, and abrasion resistance, the amount of the BR based on 100% by mass of the rubber component is preferably 10% by mass or more, more preferably 20% by mass or more, still more preferably 30% by mass or more, further preferably 50% by mass or more. Moreover, the upper limit of the amount is not particularly critical but is preferably 90% by mass or less, more preferably 80% by mass or less, still more preferably 70% by mass or less.

The BR may be either an unmodified BR or a modified BR.

The modified BR may be, for example, a BR having a functional group interactive with a filler such as silica. For example, it may be a chain end-modified BR obtained by modifying at least one chain end of BR with a compound (modifier) having the functional group (i.e., a chain end-modified BR terminated with the functional group); a backbone-modified BR having the functional group in the backbone; a backbone- and chain end-modified BR having the functional group in both the backbone and chain end (e.g., a backbone- and chain end-modified BR in which the backbone has the functional group and at least one chain end is modified with the modifier); or a chain end-modified BR that has been modified (coupled) with a polyfunctional compound having two or more epoxy groups in the molecule so that a hydroxyl or epoxy group is introduced.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. Preferred among these are amino (preferably amino whose hydrogen atom is replaced with a C1-C6 alkyl group), alkoxy (preferably C1-C6 alkoxy), and alkoxysilyl (preferably C1-C6 alkoxysilyl) groups.

The modified BR may suitablybe, for example, a BRmodified with a compound (modifier) represented by the following formula: 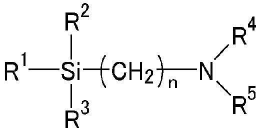 wherein R¹, R², and R³ are the same or different and each represent an alkyl, alkoxy, silyloxy, acetal, carboxyl (-COOH), or mercapto (-SH) group or a derivative thereof; R⁴ and R⁵ are the same or different and each represent a hydrogen atom or an alkyl group, and R⁴ and R⁵ may be joined together to form a ring structure with the nitrogen atom; and n represents an integer.

The modified BR modified with a compound (modifier) of the above formula may suitably be, for example, a solution-polymerized polybutadiene rubber (BR) having a polymerizing end (active terminal) modified with a compound of the above formula.

R¹, R², and R³ may each suitably be an alkoxy group, preferably a C1-C8, more preferably C1-C4, alkoxy group. R⁴ and R⁵ may each suitably be an alkyl group, preferably a C1-C3 alkyl group. The symbol n is preferably 1 to 5, more preferably 2 to 4, still more preferably 3. When R⁴ and R⁵ are joined together to form a ring structure with the nitrogen atom, the ring structure is preferably a 4- to 8-membered ring. The term "alkoxy group" encompasses cycloalkoxy groups (e.g., cyclohexyloxy group) and aryloxy groups (e.g., phenoxy and benzyloxy groups).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. Preferred among these are 3-dimethylaminopropyltrimethoxysilane, 3-dimethylaminopropyltriethoxysilane, and 3-diethylaminopropyltrimethoxysilane. These modifiers may be used alone, or two or more of these may be used in combination.

The modified BR may also suitably be a modified BR that has been modified with any of the following compounds (modifiers), including: polyglycidyl ethers of polyhydric alcohols such as ethylene glycol diglycidyl ether, glycerol triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxidized liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxyaniline, diglycidylorthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3-bisaminomethylcyclohexane;
amino group-containing acid chlorides such as bis(1-methylpropyl)carbamyl chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis(glycidyloxypropyl)-tetramethyldisiloxane and (3-glycidyloxypropyl)-pentamethyldisiloxane;
sulfide group-containing silane compounds such as (trimethylsilyl) [3-(trimethoxysilyl)propyl]sulfide, (trimethylsilyl) [3-(triethoxysilyl)propyl]sulfide, (trimethylsilyl) [3-(tripropoxysilyl)propyl]sulfide, (trimethylsilyl) [3-(tributoxysilyl)propyl]sulfide, (trimethylsilyl) [3-(methyldimethoxysilyl)propyl]sulfide, (trimethylsilyl) [3-(methyldiethoxysilyl)propyl]sulfide, (trimethylsilyl) [3-(methyldipropoxysilyl)propyl]sulfide, and (trimethylsilyl)[3-(methyldibutoxysilyl)propyl]sulfide;
N-substituted aziridine compounds such as ethyleneimine and propyleneimine; alkoxysilanes such as methyltriethoxysilane; (thio)benzophenone compounds containing amino and/or substituted amino groups such as 4-N,N-dimethylaminobenzophenone, 4-N,N-di-t-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis(tetraethylamino)benzophenone; benzaldehyde compounds containing amino and/or substituted amino groups such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurilolactam, N-vinyl-ω-laurilolactam, N-methyl-β-propiolactam, and N-phenyl-β-propiolactam; and
N,N-bis(2,3-epoxypropoxy)-aniline, 4,4-methylene-bis(N,N-glycidylaniline), tris(2,3-epoxypropyl)-1,3,5-triazine-2,4,6-triones, N,N-diethylacetamide, N-methylmaleimide, N,N-diethylurea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. In particular, it is preferably a modified BR modified with an alkoxysilane.

The modification with the compound (modifier) may be carried out by known methods.

The combined amount of the isoprene-based rubber and BR based on 100% by mass of the rubber component in the rubber composition is preferably 30% by mass or more, more preferably 60% by mass or more, still more preferably 80% by mass or more, particularly preferably 100% by mass. A higher combined amount tends to lead to better low-temperature properties, thereby providing desired low/high-temperature performance on ice.

The rubber component of the rubber composition may include additional rubbers as long as the effects are not impaired. Examples of such additional rubbers include diene rubbers such as styrene butadiene rubber (SBR), acrylonitrile butadiene rubber (NBR), chloroprene rubber (CR), butyl rubber (IIR), and styrene-isoprene-butadiene copolymer rubber (SIBR).

### (Water-soluble fine particle)

The water-soluble fine particle may be any fine particle soluble in water. For example, materials having a water solubility of at least 1 g/100 g of water at room temperature (20°C) may be used.

In view of the balance between low-temperature performance on ice, high-temperature performance on ice, and abrasion resistance, the water-soluble fine particle has a median particle size (median size, D50) of 1 µm to 1 mm, preferably 2 µm to 800 µm, more preferably 2 µm to 500 µm.

Herein, the median particle size may be measured by laser diffraction.

The amount of the water-soluble fine particle per 100 parts by mass of the rubber component is 25 parts by mass or more. When the amount is not less than the lower limit, good low/high-temperature performance on ice tends to be obtained. The amount is preferably 100 parts by mass or less, more preferably 70 parts by mass or less, still more preferably 50 parts by mass or less, particularly preferably 40 parts by mass or less, most preferably 30 parts by mass or less. When the amount is not more than the upper limit, good rubber physical properties such as abrasion resistance tend to be obtained.

Examples of the water-soluble fine particle include water-soluble inorganic salts and water-soluble organic substances. These types of water-soluble fine particles may be used alone, or two or more of these may be used in combination.

Examples of the water-soluble inorganic salts include metal sulfates such as magnesium sulfate and potassium sulfate; metal chlorides such as potassium chloride, sodium chloride, calcium chloride, and magnesium chloride; metal hydroxides such as potassium hydroxide and sodium hydroxide; carbonates such as potassium carbonate and sodium carbonate; and phosphates such as sodium hydrogen phosphate and sodium dihydrogen phosphate.

Examples of the water-soluble organic substances include lignin derivatives and saccharides.

Suitable examples of the lignin derivatives include lignin sulfonic acid and lignosulfonates. The lignin derivatives may be prepared either by a sulfite pulping method or a kraft pulping method.

Examples of the lignosulfonates include alkali metal salts, alkaline earth metal salts, ammonium salts, and alcohol amine salts of lignin sulfonic acid. Preferred among these are alkali metal salts (e.g., potassium or sodium salts) and alkaline earth metal salts (e.g., calcium, magnesium, lithium, or barium salts) of lignin sulfonic acid.

The degree of sulfonation of the lignin derivatives is preferably 1.5 to 8.0/OCH₃. Such lignin derivatives include a lignin sulfonic acid and/or lignosulfonate in which lignin and/or a degradation product thereof is at least partially substituted with a sulfo group (sulfone group). The sulfo group of the lignin sulfonic acid may be unionized, or the hydrogen atom of the sulfo group may be replaced by an ion such as a metal ion. The degree of sulfonation is more preferably 3.0 to 6.0/OCH₃. When the degree of sulfonation is within the above-mentioned range, good performance on ice tends to be obtained, and the balance between this performance and abrasion resistance tends to be improved.

The degree of sulfonation of the lignin derivative particle (lignin derivative that forms the particle) refers to the ratio of introduced sulfo groups calculated by the following equation: Degree of sulfonation (/OCH3) = (S (mol) in the sulfone groups in the lignin derivative) /(the methoxyl groups (mol) of the lignin derivative).

The saccharides may be any monosaccharide, oligosaccharide, or polysaccharide having any number of carbon atoms. Examples of such monosaccharides include trioses such as aldotriose and ketotriose; tetroses such as erythrose and threose; pentoses such as xylose and ribose; hexoses such as mannose, allose, altrose, and glucose; and heptoses such as sedoheptulose. Examples of such oligosaccharides include disaccharides such as sucrose and lactose; trisaccharides such as raffinose and melezitose; tetrasaccharides such as acarbose and stachyose; and higher oligosaccharides such as xylooligosaccharide and cellooligosaccharide. Examples of such polysaccharides include glycogen, starch (amylose, amylopectin), cellulose, hemicellulose, dextrin, and glucan.

### (Silica)

In view of the balance of the properties, the rubber composition preferably contains silica as filler. Examples of the silica include dry silica (anhydrous silica) and wet silica (hydrous silica) . Among these, wet silica is preferred because it contains a large number of silanol groups. Commercial products of the silica include products from Degussa, Rhodia, Tosoh Silica Corporation, Solvay Japan, and Tokuyama Corporation. These types of silica may be used alone, or two or more of these may be used in combination.

The amount of the silica per 100 parts by mass of the rubber component is preferably 25 parts by mass or more, more preferably 30 parts by mass or more, still more preferably 50 parts by mass or more, further preferably 55 parts by mass or more, particularly preferably 60 parts by mass or more. When the amount is not less than the lower limit, good abrasion resistance and good handling stability tend to be obtained. The upper limit of the amount is not particularly critical but is preferably 300 parts by mass or less, more preferably 200 parts by mass or less, still more preferably 170 parts by mass or less, particularly preferably 100 parts by mass or less, most preferably 80 parts by mass or less. When the amount is not more than the upper limit, good dispersibility tends to be obtained.

The silica preferably has a nitrogen adsorption specific surface area (N₂SA) of 70 m²/g or more, more preferably 140 m²/g or more, still more preferably 160 m²/g or more. When the N₂SA is not less than the lower limit, good abrasion resistance and good tensile strength tend to be obtained. Moreover, the upper limit of the N₂SA of the silica is not particularly critical but is preferably 500 m²/g or less, more preferably 300 m²/g or less, still more preferably 250 m²/g or less. When the N₂SA is not more than the upper limit, good dispersibility tends to be obtained.

The N₂SA of the silica is measured by the BET method in accordance with ASTM D3037-93.

In view of the balance between low/high-temperature performance on ice and abrasion resistance, the amount of the silica based on a total of 100% by mass of silica and carbon black in the rubber composition is preferably 50% by mass or more, more preferably 80% by mass or more, still more preferably 90% by mass or more.

### (Silane coupling agent)

The rubber composition containing silica preferably also contains a silane coupling agent.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products of such silane coupling agents include products from Degussa, Momentive, Shin-Etsu Silicone, Tokyo Chemical Industry Co., Ltd., AZmax. Co., and Dow Corning Toray Co., Ltd. These silane coupling agents may be used alone, or two or more of these may be used in combination.

The amount of the silane coupling agent per 100 parts by mass of the silica is preferably 3 parts by mass or more, more preferably 6 parts by mass or more. When the amount is 3 parts by mass or more, good properties such as tensile strength tend to be obtained. The amount is also preferably 20 parts by mass or less, more preferably 15 parts by mass or less. An amount of 20 parts by mass or less tends to provide an effect commensurate with the amount.

### (Carbon black)

In view of the balance of the properties, the rubber composition preferably contains carbon black as filler. Non-limiting examples of the carbon black include N134, N110, N220, N234, N219, N339, N330, N326, N351, N550, and N762. Commercial products of such carbon black include products from Asahi Carbon Co., Ltd., Cabot Japan K.K., Tokai Carbon Co., Ltd., Mitsubishi Chemical Corporation, Lion Corporation, NSCC Carbon Co., Ltd., and Columbia Carbon. These types of carbon black may be used alone, or two or more of these may be used in combination.

The amount of the carbon black per 100 parts by mass of the rubber component is preferably 1 part by mass or more, more preferably 3 parts by mass or more. When the amount is not less than the lower limit, good properties such as abrasion resistance and low/high-temperature performance on ice (grip performance on ice) tend to be obtained. The amount is also preferably 10 parts by mass or less, more preferably 7 parts by mass or less. When the amount is not more than the upper limit, the rubber composition tends to provide good processability.

The carbon black preferably has a nitrogen adsorption specific surface area (N₂SA) of 50 m²/g or more, more preferably 80 m²/g or more, still more preferably 100 m²/g or more. A N₂SA of not less than the lower limit tends to lead to good abrasion resistance and good low/high-temperature grip performance on ice. The N₂SA is also preferably 200 m²/g or less, more preferably 150 m²/g or less, still more preferably 130 m²/g or less. Carbon black having a N₂SA of not more than the upper limit tends to disperse well.

The nitrogen adsorption specific surface area of the carbon black is determined in accordance with JIS K6217-2:2001.

In view of the balance between low/high-temperature performance on ice and abrasion resistance, the combined amount of the silica and carbon black per 100 parts by mass of the rubber component in the rubber composition is preferably 50 to 120 parts by mass, and is more preferably 55 parts by mass or more, still more preferably 60 parts by mass or more, but more preferably 100 parts by mass or less, still more preferably 80 parts by mass or less.

### (Liquid plasticizer)

The rubber composition contains a liquid plasticizer having a glass transition temperature (Tg) of -50°C or lower in an amount of more than 30 parts by mass per 100 parts by mass of the rubber component. With such an amount of such a liquid plasticizer, excellent abrasion resistance and excellent low/high-temperature performance on ice can be obtained. The amount of the liquid plasticizer is preferably 33 parts by mass or more, more preferably 35 parts by mass or more. The upper limit of the amount is not particularly critical. In view of properties such as abrasion resistance, it is preferably 100 parts by mass or less, more preferably 70 parts by mass or less, still more preferably 55 parts by mass or less.

In view of properties such as low/high-temperature performance on ice and fuel economy, the glass transition temperature (Tg) of the liquid plasticizer is preferably -55°C or lower. Moreover, the lower limit of the Tg is not particularly critical, but in view of properties such as wet grip performance it is preferably -90°C or higher, more preferably -85°C or higher.

Herein, the glass transition temperature of the liquid plasticizer is measured at a temperature increase rate of 10°C/min using a differential scanning calorimeter (Q200, TA Instruments Japan) in accordance with JIS K 7121:1987.

The liquid plasticizer may be any plasticizer that is liquid at 20°C and has the predetermined glass transition temperature range and the liquid plasticizer is at least one selected from the group consisting of plant oils and liquid diene polymers. These liquid plasticizers may be used alone, or two or more of these may be used in combination.

Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Commercial products of such oils include products from Idemitsu Kosan Co., Ltd., Sankyo Yuka Kogyo K.K., Japan Energy Corporation, Olisoy, H&R, Hokoku Corporation, Showa Shell Sekiyu K.K., Fuji Kosan Co., Ltd., and The Nisshin OilliO Group, Ltd. Among these, sunflower oil or rapeseed oil is preferred in order to more suitably achieve the effects of the present invention.

Examples of the liquid diene polymers include diene polymers that are liquid at 20°C, such as liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene butadiene copolymers. The chain end or backbone of these polymers may be modified with a polar group. Preferred among these is at least one selected from the group consisting of liquid polybutadiene polymers, liquid polyisoprene polymers, liquid styrene butadiene copolymers, liquid farnesene polymers, and liquid farnesene butadiene copolymers, all of which are liquid at 20°C. In order to more suitably achieve the effects of the present invention, it is more preferred to use a liquid polybutadiene polymer, liquid farnesene polymer, or liquid farnesene butadiene copolymer which is liquid at 20°C, still more preferably a liquid farnesene polymer or liquid farnesene butadiene copolymer which is liquid at 20°C, particularly preferably a liquid farnesene butadiene copolymer which is liquid at 20°C, among others.

In order to more suitably achieve the effects of the present invention, the weight average molecular weight (Mw) of the liquid diene polymers is preferably 2000 or more, more preferably 3000 or more, but preferably 100000 or less, more preferably 70000 or less.

Herein, the weight average molecular weight (Mw) is determined by gel permeation chromatography (GPC) (GPC-8000 series available from Tosoh Corporation, detector: differential refractometer, column: TSKGEL SUPERMALTPORE HZ-M available from Tosoh Corporation) calibrated with polystyrene standards.

The rubber composition may further contain additional liquid plasticizers as long as the effects are not impaired. Examples of such additional liquid plasticizers include process oils such as paraffinic process oils, aromatic process oils, and naphthenic process oils.

The rubber composition may contain a resin (solid resin: resin that is solid at room temperature (25°C)).

Examples of the resin (solid resin) include aromatic vinyl polymers, coumarone-indene resins, indene resins, rosin resins, terpene resins, and acrylic resins. Commercial products of such resins include products from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JX energy, Arakawa Chemical Industries, Ltd., Taoka Chemical Co., Ltd., and Toagosei Co., Ltd. These resins may be used alone, or two or more of these may be used in combination. Preferred among these are aromatic vinyl polymers, coumarone-indene resins, terpene resins, and rosin resins.

In view of the balance between low-temperature performance on ice, high-temperature performance on ice, and abrasion resistance, the combined amount of the resin (solid resin) and liquid plasticizer per 100 parts by mass of the rubber component in the rubber composition is preferably 33 parts by mass or more, more preferably 35 parts by mass or more. The upper limit of the combined amount is not particularly critical . In view of properties such as abrasion resistance, it is preferably 100 parts by mass or less, more preferably 70 parts by mass or less, still more preferably 55 parts by mass or less.

### (Other materials)

In view of properties such as crack resistance and ozone resistance, the rubber composition preferably contains an antioxidant.

Non-limiting examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis-[methylene-3-(3',5'-di-t-butyl-4'-hydroxyphenyl)-propionate]methane. Among these, p-phenylenediamine antioxidants or quinoline antioxidants are preferred, with N-(1,3-dimethylbutyl)-N'-phenyl-p-phenylenediamine or 2,2,4-trimethyl-1,2-dihydroquinoline polymer being more preferred. Commercial products of such antioxidants include products from Seiko Chemical Co., Ltd., Sumitomo Chemical Co., Ltd., Ouchi Shinko Chemical Industrial Co., Ltd., and Flexsys.

The amount of the antioxidant per 100 parts by mass of the rubber component is preferably 0.2 parts by mass or more, more preferably 0.5 parts by mass or more. When the amount is not less than the lower limit, sufficient ozone resistance tends to be obtained. The amount is preferably 7.0 parts by mass or less, more preferably 4.0 parts by mass or less. When the amount is not more than the upper limit, good tire appearance tends to be obtained.

The rubber composition preferably contains stearic acid. In view of the balance of the properties, the amount of the stearic acid per 100 parts by mass of the rubber component is preferably 0.5 to 10 parts by mass, more preferably 0.5 to 5 parts by mass.

The stearic acid may be a conventional one, and examples include products from NOF Corporation, Kao Corporation, FUJIFILM Wako Pure Chemical Corporation, and Chiba Fatty Acid Co., Ltd.

The rubber composition preferably contains zinc oxide. In view of the balance of the properties, the amount of the zinc oxide per 100 parts by mass of the rubber component is preferably 0.5 to 10 parts by mass, more preferably 1 to 5 parts by mass.

The zinc oxide may be a conventional one, and examples include products from Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The rubber composition may contain a wax. Non-limiting examples of the wax include petroleum waxes, natural waxes, and synthetic waxes produced by purifying or chemically treating a plurality of waxes. These waxes may be used alone, or two or more of these may be used in combination.

Examples of the petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing. Commercial products of such waxes include products from Ouchi Shinko Chemical Industrial Co., Ltd., Nippon Seiro Co., Ltd., and Seiko Chemical Co., Ltd. The amount of the wax may be appropriately selected in view of ozone resistance and cost.

The rubber composition preferably contains sulfur in order to moderately crosslink the polymer chains to provide a good balance of the properties.

The amount of the sulfur per 100 parts by mass of the rubber component is preferably 0.1 parts by mass or more, more preferably 0.5 parts by mass or more, still more preferably 0.7 parts by mass or more. The amount is preferably 6.0 parts by mass or less, more preferably 4.0 parts by mass or less, still more preferably 3.0 parts by mass or less. When the amount is within the above-mentioned range, a good balance of the properties tends to be obtained.

Examples of the sulfur include those usually used in the rubber industry, such as powdered sulfur, precipitated sulfur, colloidal sulfur, insoluble sulfur, highly dispersible sulfur, and soluble sulfur. Commercial products of such sulfur include products from Tsurumi Chemical Industry Co., Ltd., Karuizawa Sulfur Co., Ltd., Shikoku Chemicals Corporation, Flexsys, Nippon Kanryu Industry Co., Ltd., and Hosoi Chemical Industry Co., Ltd. These types of sulfur may be used alone, or two or more of these may be used in combination.

The rubber composition preferably contains a vulcanization accelerator.

The amount of the vulcanization accelerator is not particularly critical and may be arbitrarily selected depending on the desired cure rate or crosslink density. The amount is usually 0.3 to 10 parts by mass, preferably 0.5 to 7 parts by mass per 100 parts by mass of the rubber component.

Any type of vulcanization accelerator may be used including those usually used. Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolyl sulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These vulcanization accelerators may be used alone, or two or more of these may be used in combination. In view of the balance of the properties, sulfenamide vulcanization accelerators or guanidine vulcanization accelerators are preferred among these.

In addition to the above-mentioned components, the rubber composition may appropriately contain other compounding agents usually used in the tire industry such as release agents.

The rubber composition may be prepared by known methods. For example, it may be prepared by kneading the components using a rubber kneading machine such as an open roll mill or Banbury mixer, and vulcanizing the kneaded mixture.

The kneading conditions are as follows. In a base kneading step that includes kneading additives other than vulcanizing agents and vulcanization accelerators, the kneading temperature is usually 50 to 200°C, preferably 80 to 190°C, and the kneading time is usually 30 seconds to 30 minutes, preferably one minute to 30 minutes. In a final kneading step that includes kneading vulcanizing agents and vulcanization accelerators, the kneading temperature is usually 100°C or lower, preferably from room temperature to 80°C. The composition obtained after kneading vulcanizing agents and vulcanization accelerators is usually vulcanized by, for example, press vulcanization. The vulcanization temperature is usually 120 to 200°C, preferably 140 to 180°C.

The rubber composition may be prepared by common methods. Specifically, for example, it may be prepared by kneading the components in a kneading machine such as a Banbury mixer, kneader, or open roll mill, and vulcanizing the kneaded mixture. The rubber composition is for use in treads (monolayer treads, cap treads of multilayer treads) of studless winter tires.

### (Studless winter tire)

The studless winter tire of the present invention may be produced using the rubber composition by usual methods. Specifically, the unvulcanized rubber composition containing the above-mentioned components may be extruded into the shape of a tread (e.g., cap tread) and assembled with other tire components in a tire building machine in a usual manner to form an unvulcanized tire, which may then be heated and pressurized in a vulcanizer to produce a studless winter tire. The studless winter tire of the present invention is suitable for passenger vehicles.

The tread of the studless winter tire preferably has a road contact surface with pores having an average diameter of 0.1 to 100 µm after the running conditions indicated below. When a studless winter tire including a tread formed from the rubber composition of the present invention has such a feature, the studless winter tire can achieve improved performance on ice and reduced noise while maintaining handling stability.

### (Running conditions)

The tire is mounted on each wheel of a vehicle (a front-engine, rear-wheel-drive vehicle of 2000 cc displacement made in Japan) and run 100 km on a dry road at ordinary temperature and then 4 km on a snowy or icy road at -10 to -1°C.

The average diameter of the pores is preferably 0.1 to 100 µm, but in view of handling stability, performance on ice, and reduced noise it is more preferably 1 µm or more, still more preferably 10 µm or more, but more preferably 80 µm or less, still more preferably 70 µm or less.

Herein, the average diameter of the pores can be determined by scanning electron microscopy (SEM). Specifically, the pores may be photographed with a scanning electron microscope and then the diameter of each pore may be determined as the spherical diameter when it has a spherical shape, the minor diameter when it has a needle- or rod-like shape, or the average diameter through the center when it has an irregular shape. The average of the diameters of 100 pores may be defined as the average diameter.

The studless winter tire preferably has a rate of reduction in pattern noise from before to after the running conditions indicated below, which is enhanced by 2 to 10% as compared with a studless winter tire including a tread formed from a rubber composition having the same formulation except for containing no water-soluble fine particle. In other words, the rate of reduction in pattern noise, which indicates how much the pattern noise after the running conditions below is reduced compared to the pattern noise before running, is preferably enhanced by 2 to 10% as compared to the rate of reduction in pattern noise of a studless winter tire including a tread formed from a rubber composition having the same formulation except for containing no water-soluble fine particle.

### (Running conditions)

The tire is mounted on each wheel of a vehicle (a front-engine, rear-wheel-drive vehicle of 2000 cc displacement made in Japan) and run 100 km on a dry road at ordinary temperature and then 4 km on a snowy or icy road at -10 to -1°C.

Herein, the pattern noise can be determined as follows. The studless winter tire may be mounted on each wheel of a vehicle (a front-engine, rear-wheel-drive vehicle of 2000 cc displacement made in Japan, rim: 7.5 J × 17, internal pressure: 220 kPa) and run on a road noise measuring road (icy road) at 60 km/h. The noise level inside the vehicle in the driver's window-side ear position during the running may be measured to determine the sound pressure level at a narrow-band peak of cavity resonance noise around 500 Hz.

### EXAMPLES

The present invention will be specifically described with reference to, but not limited to, examples.

The chemicals used in examples and comparative examples are listed below.
Natural rubber (NR): RSS#3
Polybutadiene rubber (BR): BR150B available from Ube Industries, Ltd. (cis content: 95% by mass or higher)
Carbon black: Seast N220 available from Mitsubishi Chemical Corporation
Silica: Ultrasil VN3 available from Evonik Degussa (N₂SA: 172 m²/g)
Silane coupling agent: Si266 available from Evonik Degussa
Water-soluble fine particle 1: MN-00 available from Umai Chemical Co., Ltd. (magnesium sulfate, median particle size (median size): 75 µm)
Water-soluble fine particle 2: USN-00 available from Umai Chemical Co., Ltd. (extremely fine particle magnesium sulfate, median particle size (median size): 3 µm)
Water-soluble fine particle 3: sodium lignin sulfonate available from Tokyo Chemical Industry Co., Ltd. (median particle size (median size): 100 µm)
Wax: Ozoace wax available from Nippon Seiro Co., Ltd.
Antioxidant: NOCRAC 6C available from Ouchi Shinko Chemical Industrial Co., Ltd.
Plant oil: sunflower oil available from The Nisshin OilliO Groups, Ltd. (glycerol fatty acid triester, glass transition temperature: -60°C, melting point: -15°C, oleic acid content: 55% by mass, iodine number: 80)
Liquid diene polymer: FB-823 available from Kuraray Co., Ltd. (liquid farnesene butadiene copolymer, glass transition temperature: -78°C, weight average molecular weight: 50,000, farnesene/butadiene ratio = 80/20)
Mineral oil: paraffinic process oil (glass transition temperature: -45°C)
Stearic acid: KIRI available from NOF Corporation
Zinc oxide: zinc oxide #2 available from Mitsui Mining & Smelting Co., Ltd.
Sulfur: powdered sulfur available from Tsurumi Chemical Industry Co., Ltd.
Vulcanization accelerator: NOCCELER NS available from Ouchi Shinko Chemical Industrial Co., Ltd.

### [Measurement of median particle size (median size) of water-soluble fine particle]

The median particle size was measured by laser diffraction using SALD-2000J available from Shimadzu Corporation (the following measurement procedure was used).

### <Measurement procedure>

The water-soluble fine particles were dispersed in a solution mixture of a dispersion solvent (toluene) and a dispersant (a 10% by mass solution of sodium di(2-ethylhexyl) sulfosuccinate in toluene) at room temperature. The dispersion was stirred for five minutes under ultrasonic irradiation to prepare a test solution. The test solution was transferred to a batch cell, and one minute later the measurement was performed (refractive index: 1.70-0.20 i).

### <Examples (Ex.) and Comparative Examples (Comp. Ex.)>

Using the recipe shown in Table 1 or 2, a 1.7 L Banbury mixer was charged with the natural rubber and silica and with the polybutadiene rubber and silica, and after each addition they were kneaded at 150°C for three minutes to give a kneaded mixture (masterbatch). To the masterbatch were added the materials other than the sulfur and vulcanization accelerator, and they were kneaded at 150°C for two minutes to give a kneaded mixture. Then, the sulfur and vulcanization accelerator were added, and they were kneaded using an open roll mill at 80°C for five minutes to obtain an unvulcanized rubber composition.

The unvulcanized rubber composition was press-vulcanized at 170°C for 12 minutes using a 0.5 mm-thick mold to obtain a vulcanized rubber composition.

Separately, the unvulcanized rubber compositions prepared as above were each formed into a cap tread shape and assembled with other tire components, followed by vulcanization at 170°C for 15 minutes to prepare a test studless winter tire (tire size: 195/65R15).

The vulcanized rubber compositions and test studless winter tires prepared as above were stored at room temperature in a dark place for three months and then evaluated as follows. Tables 1 and 2 show the results.

### <Abrasion resistance>

The abrasion loss of the vulcanized rubber compositions was measured using a Lambourn abrasion tester (Iwamoto Seisakusho Co., Ltd.) at a surface rotational speed of 50 m/min, an applied load of 3.0 kg, a sand feed rate of 15 g/min, and a slip ratio of 20%. A reciprocal of the abrasion loss was calculated. The reciprocal of the abrasion loss of Comparative Example 1 is set equal to 100, and the reciprocals of the abrasion losses of the other formulation examples are expressed as an index. A higher index indicates better abrasion resistance.

### <Low-temperature grip performance on ice>

The vehicle performance on ice of the test studless winter tires was evaluated under the following conditions. The test site was the Nayoro test track of Sumitomo Rubber Industries, Ltd. in Hokkaido, Japan. The air temperature was -10 to -6°C. The test tires were mounted on a front-engine, rear-wheel-drive car of 2000 cc displacement made in Japan. The stopping distance on ice was measured which was the distance required for the car to stop after the brakes that lock up were applied at 30 km/h. The stopping distances are expressed as an index relative to Comparative Example 1 using the equation below. A higher index indicates better low-temperature performance on ice. (Low-temperature grip performance on ice) = (Brake stopping distance of Comparative Example 1) / (Stopping distance of each formulation example) × 100

### <High-temperature grip performance on ice>

The vehicle performance on ice of the test studless winter tires was evaluated under the following conditions. The test site was the Nayoro test track of Sumitomo Rubber Industries, Ltd. in Hokkaido, Japan. The air temperature was -5 to 0°C. The test tires were mounted on a front-engine, rear-wheel-drive car of 2000 cc displacement made in Japan. The stopping distance on ice was measured which was the distance required for the car to stop after the brakes that lock up were applied at 30 km/h. The stopping distances are expressed as an index relative to Comparative Example 1 using the equation below. A higher index indicates better high-temperature performance on ice. (High-temperature grip performance on ice) = (Brake stopping distance of Comparative Example 1) / (Stopping distance of each formulation example) × 100

### <Performance on ice>

The vehicle performance on ice of the test studless winter tires was evaluated under the following conditions. The test site was the Nayoro test track of Sumitomo Rubber Industries, Ltd. in Hokkaido, Japan. The air temperature was -5 to 0°C. The test tires were mounted on a front-engine, rear-wheel-drive car of 2000 cc displacement made in Japan. The stopping distance on ice was measured which was the distance required for the car to stop after the brakes that lock up were applied at 30 km/h. The stopping distances are expressed as an index relative to Comparative Example 11 using the equation below. A higher index indicates better performance on ice. (Performance on ice) = (Brake stopping distance of Comparative Example 11) / (Stopping distance of each formulation example) × 100

### <Pattern noise-reducing properties>

We calculated the rate of reduction in pattern noise after the running conditions indicated below when compared to before running. The thus calculated values (rates of reduction in pattern noise) are expressed as an index according to the equation below using Comparative Example 11 as a reference. A higher index indicates better pattern noise-reducing properties. (Pattern noise-reducing properties) = (Rate of reduction in pattern noise of each formulation example) / (Rate of reduction in pattern noise of Comparative Example 11) × 100

### (Running conditions)

The test studless winter tire of each example was mounted on each wheel of a vehicle (a front-engine, rear-wheel-drive vehicle of 2000 cc displacement made in Japan, rim: 7.5 J × 17, internal pressure: 220 kPa) and run 100 km on a dry road at ordinary temperature and then 4 km on a snowy or icy road at -10 to -1°C. The test site was the Okayama test track (dry road) .

The pattern noise was determined by measuring the noise level inside the vehicle in the driver's window-side ear position during running at 60 km/h to determine the sound pressure level at a narrow-band peak of cavity resonance noise around 500 **Hz.**

### <Handling stability>

The test studless winter tire of each example was mounted on a front-engine, rear-wheel-drive car of 2000 cc displacement made in Japan and a test driver drove the car on a dry asphalt test track with a road surface temperature of 25°C. Then, the test driver comprehensively evaluated steering response to small steering angle changes and response to sudden lane changes using the result of Comparative Example 11 taken as 100. A higher value indicates better handling stability.

**[Table 1]**

| | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|---|
| NR | 50 | 50 | 50 | 50 | 50 | 50 | 40 | 50 | 50 | 50 | 50 | 50 | 50 |
| BR | 50 | 50 | 50 | 50 | 50 | 50 | 60 | 50 | 50 | 50 | 50 | 50 | 50 |
| Carbon black | 5 | 5 | 5 | 5 | 5 | 5 | 5 | 5 | 5 | 5 | 5 | 5 | 5 |
| Silica | 70 | 70 | 70 | 70 | 70 | 70 | 70 | 70 | 70 | 70 | 70 | 70 | 70 |
| Silane coupling agent | 8 | 8 | 8 | 8 | 8 | 8 | 8 | 8 | 8 | 8 | 8 | 8 | 8 |
| Water-soluble fine particle 1 | 25 | 25 | 40 | 25 | - | - | 25 | 25 | 25 | - | - | - | 25 |
| Water-soluble fine particle 2 | - | - | - | - | 25 | - | - | - | - | - | - | - | - |
| Water-soluble fine particle 3 | - | - | - | - | - | 25 | - | - | - | - | - | - | - |
| Wax | 1 | 1 | 1 | 1 | 1 | 1 | 1 | 1 | 1 | 1 | 1 | 1 | 1 |
| Antioxidant | 2 | 2 | 2 | 2 | 2 | 2 | 2 | 2 | 2 | 2 | 2 | 2 | 2 |
| Plant oil | 35 | - | 40 | 40 | 35 | 35 | 35 | - | 20 | 20 | - | - | - |
| Liquid diene polymer | - | 35 | - | - | - | - | - | - | - | - | - | - | - |
| Mineral oil | - | - | - | - | - | - | - | 40 | - | - | 40 | 20 | 20 |
| Stearic acid | 1 | 1 | 1 | 1 | 1 | 1 | 1 | 1 | 1 | 1 | 1 | 1 | 1 |
| Zinc oxide | 1.5 | 1.5 | 1.5 | 1.5 | 1.5 | 1.5 | 1.5 | 1.5 | 1.5 | 1.5 | 1.5 | 1.5 | 1.5 |
| Sulfur | 1 | 1 | 1 | 1 | 1 | 1 | 1 | 1 | 1 | 1 | 1 | 1 | 1 |
| Vulcanization accelerator | 2 | 2 | 2 | 2 | 2 | 2 | 2 | 2 | 2 | 2 | 2 | 2 | 2 |
| High-temperature grip performance on ice | 110 | 110 | 120 | 110 | 112 | 109 | 110 | 100 | 108 | 95 | 95 | 95 | 105 |
| Low-temperature grip performance on ice | 105 | 107 | 110 | 110 | 108 | 108 | 110 | 100 | 102 | 95 | 95 | 90 | 95 |
| Abrasion resistance | 100 | 115 | 90 | 100 | 100 | 100 | 105 | 100 | 100 | 110 | 100 | 110 | 100 |

Table 1 shows that an excellent balance between low-temperature performance on ice, high-temperature performance on ice, and abrasion resistance was achieved in the examples containing an isoprene-based rubber, BR, a water-soluble fine particle, and a large amount of a liquid plasticizer with a predetermined glass transition temperature or lower.

In particular, comparisons of Comparative Example 5 (with no water-soluble fine particle and a low content of high Tg oil), Comparative Example 6 (with a water-soluble fine particle), Comparative Example 3 (with a low Tg oil), Comparative Example 4 (with a high oil content), and Example 4 (with a water-soluble fine particle and a high content of low Tg oil) demonstrated that combining a content of a liquid plasticizer with a glass transition temperature of -50°C or lower of more than 30 parts by mass and addition of a water-soluble fine particle had the following effect: the balance between low-temperature performance on ice, high-temperature performance on ice, and abrasion resistance was synergistically improved.

**[Table 2]**

| | Ex. 11 | Ex. 12 | Ex. 13 | Ex. 14 | Comp. Ex. 11 |
|---|---|---|---|---|---|
| NR | 30 | 30 | 30 | 30 | 30 |
| BR | 70 | 70 | 70 | 70 | 70 |
| Carbon black | 10 | 10 | 10 | 10 | 10 |
| Silica | 60 | 60 | 60 | 60 | 60 |
| Silane coupling agent | 6 | 6 | 6 | 6 | 6 |
| Water-soluble fine particle 1 | 20 | - | - | 40 | - |
| Water-soluble fine particle 2 | - | 25 | - | - | - |
| Water-soluble fine particle 3 | - | - | 25 | - | - |
| Wax | 1 | 1 | 1 | 1 | 1 |
| Antioxidant | 2 | 2 | 2 | 2 | 2 |
| Plant oil | 35 | 35 | 35 | 35 | 35 |
| Stearic acid | 1 | 1 | 1 | 1 | 1 |
| Zinc oxide | 1.5 | 1.5 | 1.5 | 1.5 | 1.5 |
| Sulfur | 1 | 1 | 1 | 1 | 1 |
| Vulcanization accelerator | 2 | 2 | 2 | 2 | 2 |
| Performance on ice | 110 | 112 | 115 | 120 | 100 |
| Pattern noise-reducing properties | 102 | 105 | 105 | 110 | 100 |
| Handling stability | 102 | 101 | 102 | 100 | 100 |

Ex. 11 is a Reference Example, which is outside the scope of the claims but useful to understand the invention.

## Claims

1. A tread rubber composition for studless winter tires, comprising:
a rubber component including an isoprene-based rubber and a polybutadiene rubber;
a water-soluble fine particle having a median particle size D50 of 1 µm to 1 mm measured by laser diffraction; and
a liquid plasticizer,
the liquid plasticizer having a glass transition temperature of -50°C or lower and being present in an amount of more than 30 parts by mass per 100 parts by mass of the rubber component,
wherein the liquid plasticizer is at least one selected from the group consisting of plant oils and liquid diene polymers, and
wherein the water-soluble fine particle is present in an amount of 25 parts by mass or more per 100 parts by mass of the rubber component.

2. The tread rubber composition for studless winter tires according to claim 1,
wherein the isoprene-based rubber is present in an amount of 20% by mass or more, and the polybutadiene rubber is present in an amount of 20% by mass or more, each based on 100% by mass of the rubber component, and
the tread rubber composition comprises silica in an amount of 50% by mass or more based on a total of 100% by mass of silica and carbon black.

3. The tread rubber composition for studless winter tires according to claim 1 or 2,
wherein the at least one liquid diene polymer is at least one selected from the group consisting of liquid polybutadiene polymers, liquid polyisoprene polymers, liquid styrene butadiene copolymers, liquid farnesene polymers, and liquid farnesene butadiene copolymers, all of which are liquid at 20°C.

4. The tread rubber composition for studless winter tires according to any one of claims 1 to 3,
wherein the polybutadiene rubber has a cis content of 90% by mass or higher.

5. A studless winter tire, comprising a tread formed from the rubber composition according to any one of claims 1 to 4.

## Patentansprüche

1. Laufflächenkautschukzusammensetzung für spikelose Winterreifen, umfassend:
ein Kautschukkomponente, die einen Kautschuk auf Isoprenbasis und einen Polybutadienkautschuk enthält;
ein wasserlösliches Feinteilchen mit einer mittleren Teilchengröße D50 von 1 µm bis 1 mm, gemessen durch Laserbeugung; und
einen flüssigen Weichmacher,
der flüssige Weichmacher eine Glasübergangstemperatur von -50°C oder weniger aufweist und in einer Menge von mehr als 30 Masseteilen pro 100 Masseteilen der Kautschukkomponente vorhanden ist,
wobei der flüssige Weichmacher mindestens einer ausgewählt aus der Gruppe bestehend aus Pflanzenölen und flüssigen Dienpolymeren ist, und
wobei das wasserlösliche Feinteilchen in einer Menge von 25 Masseteilen oder mehr pro 100 Masseteilen der Kautschukkomponente vorhanden ist.

2. Laufflächenkautschukzusammensetzung für spikelose Winterreifen nach Anspruch 1,
wobei der Kautschuk auf Isoprenbasis in einer Menge von 20 Massen-% oder mehr und der Polybutadienkautschuk in einer Menge von 20 Massen-% oder mehr, jeweils bezogen auf 100 Massen-% der Kautschukkomponente, vorhanden sind, und
die Laufflächenkautschukzusammensetzung Siliciumdioxid in einer Menge von 50 Massen-% oder mehr, bezogen auf eine Gesamtmasse von 100 Massen-% an Siliciumdioxid und Carbon Black, umfasst.

3. Laufflächenkautschukzusammensetzung für spikelose Winterreifen nach Anspruch 1 oder 2,
wobei das mindestens eine flüssige Dienpolymer mindestens eines ausgewählt aus der Gruppe bestehend aus flüssigen Polybutadienpolymeren, flüssigen Polyisoprenpolymeren, flüssigen StyrolButadien-Copolymeren, flüssigen Farnesenpolymeren und flüssigen Farnesen-Butadien-Copolymeren ist, die alle bei 20 °C flüssig sind.

4. Laufflächenkautschukzusammensetzung für spikelose Winterreifen nach einem der Ansprüche 1 bis 3,
wobei der Polybutadienkautschuk einen cis-Gehalt von 90 Massen-% oder mehr aufweist.

5. Spikeloser Winterreifen, der eine Lauffläche umfasst, die aus der Kautschukzusammensetzung nach einem der Ansprüche 1 bis 4 gebildet ist.

## Revendications

1. Composition de gomme de bande de roulement pour pneus neige non cloutés, comprenant :
un composant de caoutchouc contenant un caoutchouc à base d'isoprène et un caoutchouc de polybutadiène ;
une particule fine soluble dans l'eau ayant une taille de particule médiane D50 de 1 µm à 1 mm mesurée par diffraction laser ; et
un plastifiant liquide,
le plastifiant liquide ayant une température de transition vitreuse de -50°C ou moins et étant présent en une quantité supérieure à 30 parties en masse pour 100 parties en masse du composant de caoutchouc,
dans laquelle le plastifiant liquide est au moins un élément choisi dans le groupe consistant en des huiles végétales et des polymères de diène liquides, et
dans laquelle la particule fine soluble dans l'eau est présente en une quantité de 25 parties en masse ou plus pour 100 parties en masse du composant de caoutchouc.

2. Composition de gomme de bande de roulement pour pneus neige non cloutés selon la revendication 1,
dans laquelle le caoutchouc à base d'isoprène est présent en une quantité de 20 % en masse ou plus, et le caoutchouc de polybutadiène est présent en une quantité de 20 % en masse ou plus, chacun sur la base de 100 % en masse du composant de caoutchouc, et
la composition de gomme de bande de roulement comprend de la silice en une quantité de 50 % en masse ou plus, sur la base d'un total de 100 % en masse de silice et de noir de carbone.

3. Composition de gomme de bande de roulement pour pneus neige non cloutés selon la revendication 1 ou 2,
dans laquelle le au moins un polymère de diène liquide est au moins un élément choisi dans le groupe consistant en des polymères de polybutadiène liquides, polymères de polyisoprène liquides, et copolymères de butadiène styrène liquides, polymères de farnésène liquides et copolymères de butadiène farnesène liquides, tous ceux-ci étant liquides à 20°C.

4. Composition de gomme de bande de roulement pour pneus neige non cloutés selon l'une quelconque des revendications 1 à 3,
dans laquelle le caoutchouc de polybutadiène a une teneur en cis de 90 % en masse ou plus.

5. Pneu neige non clouté, comprenant une bande de roulement formée à partir de la composition de gomme selon l'une quelconque des revendications 1 à 4.
